(19) Europäisches Patentamt / European Patent Office / Office européen des brevets

(11) **EP 2 608 416 B1**

(12) **FASCICULE DE BREVET EUROPEEN**

(45) Date de publication et mention
de la délivrance du brevet:
**08.08.2018 Bulletin 2018/32**

(51) Int Cl.:
***H04B 1/715*** (2011.01) ***H04B 1/7156*** (2011.01)

(21) Numéro de dépôt: **12198596.4**

(22) Date de dépôt: **20.12.2012**

(54) **Système de modification de la fréquence de porteuse.**

System zur Modifizierung der Trägerwellenfrequenz

System for modifying the carrier frequency

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **22.12.2011 FR 1104012**

(43) Date de publication de la demande:
**26.06.2013 Bulletin 2013/26**

(73) Titulaire: **Thales
92400 Courbevoie (FR)**

(72) Inventeurs:
• **Bruas, Patrick**
**93190 LIVRY GARGAN (FR)**
• **Touret, Marc**
**92704 COLOMBES CEDEX (FR)**

(74) Mandataire: **Brunelli, Gérald
Marks & Clerk France
Immeuble Visium
22, avenue Aristide Briand
94117 Arcueil Cedex (FR)**

(56) Documents cités:
**US-B1- 6 275 518 US-B1- 6 278 723**

**Description**

Système de modification de la fréquence de porteuse de deux signaux, utilisant un mécanisme de saut de fréquence de porteuse identique (i.e. même vitesse de saut de fréquence) et cohabitant dans la même bande d'étalement de spectre. Le mécanisme de saut de fréquence est de plus réalisé afin que chaque saut de fréquence soit effectué au même instant pour les deux signaux. Les deux signaux peuvent par exemple utiliser un accès multiple par saut de fréquence orthogonaux (connu sous le nom de OFHMA). Chaque signal est associé respectivement à une suite d'intervalles temporels consécutifs. Nous entendons par intervalles consécutifs des intervalles qui se suivent immédiatement, sans interruption. Deux intervalles appartenant à une même suite ont une durée identique mais deux intervalles associés à deux suites différentes peuvent avoir une durée différente.

Il est connu dans l'état de la technique des moyens de détermination de la fréquence de porteuse utilisant un dispositif de génération de nombres pseudo aléatoires. La génération des nombres pseudo-aléatoires est basée, entre autres, sur un intervalle temporel d'une suite d'intervalles temporels consécutifs. Ces nombres pseudo-aléatoires servant ensuite à déterminer la fréquence de porteuse à utiliser, par mise en correspondance, au moyen d'une table, du nombre pseudo-aléatoire et d'une fréquence de porteuse.

Il est connu un système définissant pour chaque signal un ensemble de sous bandes d'étalement de spectre indépendantes, à supports disjoints et différentes pour chaque signal. Ce système permet d'éviter des interférences entre les deux signaux, car chaque sous bande d'étalement de spectre n'est utilisée que par un signal. Cependant cette séparation complète des sous bandes d'étalement de spectre utilisées par les deux signaux réduit l'efficacité du signal d'un facteur correspondant au rapport entre l'étalement de la bande d'étalement de spectre totale utilisée par les deux signaux et l'étalement de la sous bande utilisée par un signal. Ceci est du aux gains de traitement de l'étalement de spectre par saut de fréquence. Dans les cas où la bande totale est partagée en deux sous bande d'étalement identique l'efficacité du signal sera réduite d'un facteur deux soit 3 dB.

Il est également connu un système implémentant le même moyen de détermination de la fréquence pour les deux signaux. Le moyen de détermination de la fréquence comportant alors deux tables de fréquence de porteuse, la première mettant en relation un nombre pseudo-aléatoire avec la fréquence de porteuse du premier signal et la deuxième mettant en relation un nombre pseudo-aléatoire avec la fréquence de porteuse du deuxième signal. Les tables de correspondances sont réalisées pour que les fréquences de porteuse des premiers et deuxièmes signaux soient différentes pour un même nombre pseudo-aléatoire. Cependant si les intervalles temporels des suites utilisées par les deux signaux ne sont pas de durées identiques, les nombres pseudo-aléatoires générés ne sont pas identiques pour les deux signaux. Donc la même fréquence risque d'être utilisée simultanément par les deux signaux. Cette solution présente donc l'inconvénient de provoquer des interférences entre ces deux signaux.

Il est connu dans l'état de la technique le brevet américain référence US 6 278 723 qui présente une méthode et un système de minimisation de la probabilité d'interférence entre différents éléments proches dans un réseau sans fil.

La présente invention vise donc à remédier à ces problèmes en proposant un système permettant de modifier la fréquence de porteuse de deux signaux utilisant un mécanisme de saut de fréquence de porteuse identique et cohabitant dans une même bande d'étalement de spectre, sans dégrader le gain de traitement, ni provoquer d'interférences entre ces deux signaux.

A cet effet l'invention a pour objet un système de modification de la fréquence de porteuse d'un premier signal associée à une première suite d'intervalles temporels consécutifs de durée T1 et d'un deuxième signal associée à une deuxième suite d'intervalles temporels consécutifs de durée T2. Le système comprend des premiers moyens de détermination (101) de deux fréquences de porteuse respectivement associé à chacun des deux signaux à partir d'un intervalle temporel ou d'au moins deux intervalles temporels, consécutifs et continus ledit ou lesdits intervalles temporels appartenant à une suite d'intervalles temporels consécutifs de durée connue. Le système comprend également des deuxièmes moyens de détermination (102) d'un premier intervalle temporel ou d'au moins deux premiers intervalles temporels consécutifs appartenant à la première suite, à partir d'un deuxième intervalle temporel appartenant à la deuxième suite, par mise en correspondance temporelle de chaque extrémité dudit intervalle temporel de ladite deuxième suite avec un intervalle de ladite première suite comprenant cette extrémité. Et dans le système les premiers moyens de détermination (101) sont adaptés pour déterminer lesdites fréquences de porteuse de manière synchronisée pour lesdits premier et deuxième signaux et à partir d'un intervalle temporel ou d'au moins deux intervalles temporels, consécutifs ledit ou lesdits intervalles temporels appartenant à ladite première suite.

Ce système permet donc de mettre en relation un intervalle temporel de la deuxième suite avec un ou plusieurs intervalles temporels de la première suite. Cette mise en relation permet au premier moyen de détermination de fréquence de porteuse d'effectuer cette détermination uniquement à partir d'intervalles de la première suite, que ce soit pour le premier et le second signal et ainsi de garantir l'utilisation de fréquences différentes, à un instant donné, pour les premiers et deuxièmes signaux.

Avantageusement les deuxièmes moyens de détermination (102) comprennent des moyens de calcul adaptés pour calculer ledit ou lesdits intervalles temporels déterminés par les relations suivantes

$$\left\{\begin{array}{l} M = PPCM(T1, T2) \\ a = M/T2 \\ d = k\%a \\ P = PartieEntiere(((d+1)*T2-1)/T1) - PartieEntière(d*T2/T1) \\ MH1 = PartieEntière(k*T2/T1) \end{array}\right.$$

dans lesquelles $T1$ représente la durée de chacun des premiers intervalles de la première suite, $T2$ représente la durée de chacun des premiers intervalles de la deuxième suite, $k$ représente le numéro dudit deuxième intervalle temporel, $P$ représente le nombre desdits premiers intervalles temporels et $MH1$ représente le numéro dudit premier intervalle temporel, $PPCM(x, y)$ est le plus petit commun multiple des deux entiers non nuls $x$ et $y$ et représente le plus petit entier strictement positif qui soit à la fois multiple de $x$ et multiple de $y$, $y\%x$ représente le reste de la division euclidienne de $x$ par $y$ et $PartieEntière(x)$ représente la partie entière de $x$ soit l'entier qui est immédiatement inférieur ou égal à $x$.

Avantageusement le procédé de modification de la fréquence de porteuse d'un premier signal associée à une première suite d'intervalles temporels consécutifs de durée T1 et d'un deuxième signal associée à une deuxième suite d'intervalles temporels consécutifs de durée T2 comporte les étapes suivantes

- une étape de détermination d'un premier intervalle temporel ou d'au moins deux premiers intervalles temporels consécutifs et appartenant à la première suite, à partir d'un deuxième intervalle temporel appartenant à la deuxième suite, par mise en correspondance temporelle de chaque extrémité dudit intervalle temporel de ladite deuxième suite avec un intervalle de ladite première suite comprenant cette extrémité
- une étape de détermination de deux fréquences de porteuse de manière synchronisée pour lesdits premier et deuxième signaux et respectivement associé à chacun des deux signaux à partir d'un intervalle temporel ou d'au moins deux intervalles temporels, consécutifs, ledit ou lesdits intervalles temporels appartenant à ladite première suite.

L'invention sera mieux comprise et d'autres avantages apparaîtront à la lecture de la description détaillée faite à titre d'exemple non limitatif et à l'aide des figures parmi lesquelles :

- La figure 1 présente un premier mode de réalisation du système suivant un aspect de l'invention.
- La figure 2 présente un premier mode de réalisation des moyens de détermination de la fréquence de porteuse
- La figure 3 présente un deuxième mode de réalisation du système suivant un aspect de l'invention.

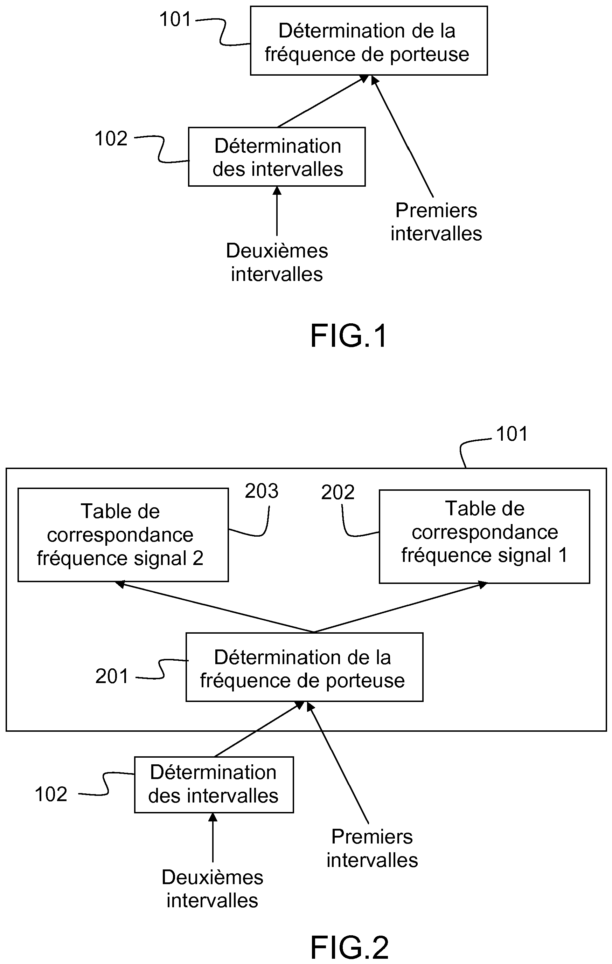

Le système tel que présenté en figure 1 présente un premier dispositif 101 chargé de déterminer à un instant donné les fréquences de porteuse respectivement associées à l'émission de deux signaux partageant la même bande d'étalement de spectre. Le premier signal étant associé à une première suite d'intervalles temporels de durée T1 et le deuxième signal étant associé à une deuxième suite d'intervalles temporels de durée T2. Le dispositif de détermination de la fréquence est décrit de façon plus précise figure 2. Ce dispositif de détermination de fréquence de la porteuse comporte entre autre un module 201 de génération d'un nombre pseudo-aléatoire et une première table 202 mettant en correspondance un nombre pseudo-aléatoire et une première fréquence de porteuse pour le premier signal et une seconde table 203 mettant en correspondance un nombre pseudo-aléatoire et une deuxième fréquence de porteuse pour le deuxième signal. La première et la deuxième fréquence de porteuse étant différentes pour un nombre pseudo-aléatoire identique. Le module 201 de génération de nombres pseudo-aléatoire effectue cette génération à partir d'un intervalle temporel ou de plusieurs intervalles temporels continus et consécutifs appartenant à la première suite d'intervalles temporels. Le système comporte également un deuxième dispositif 102 chargé de déterminer pour un intervalle temporel de la deuxième suite d'intervalles temporels, un ou plusieurs intervalles temporels continus et consécutifs de la première suite d'intervalles temporels.

Cette détermination est effectuée par mise en correspondance temporelle de chaque extrémité dudit deuxième intervalle avec un intervalle de ladite première suite comprenant cette extrémité. Si besoin, les intervalles temporels compris entre les deux intervalles temporels extrêmes sont déterminés. Ce dispositif permet donc de mettre en relation un deuxième intervalle temporel appartenant à la deuxième suite et des premiers intervalles temporels appartenant à la première suite. Ces premiers intervalles temporels sont alors utilisés par le premier dispositif 101 afin d'obtenir la fréquence de porteuse utilisée par le deuxième signal.

Le système comprenant les dispositifs 101 et 102, permet donc de générer à un instant donné, les mêmes nombres pseudo-aléatoires que ce soit en utilisant la première suite d'intervalles ou la deuxième suite d'intervalles. Et par construction de la table de correspondance entre le nombre pseudo-aléatoire et les première et deuxième fréquences de porteuse, de déterminer des fréquences de porteuse différentes pour les deux signaux.

Le deuxième dispositif de détermination utilise les relations suivantes pour effecteur la mise en correspondance :

$$M = PPCM(T1,T2)$$
$$a = M / T2$$
$$d = k\%a$$
$$P = PartieEntiere(((d + 1) * T2 - 1) / T1) - PartieEntière(d * T2 / T1)$$
$$MH1 = PartieEntière(k * T2 / T1)$$

dans lesquelles $T1$ représente la durée de chacun des premiers intervalles de la première suite, $T2$ représente la durée de chacun des deuxièmes intervalles de la deuxième suite, $k$ représente l'indice ordinal dudit deuxième intervalle temporel choisi, $P$ représente le nombre total desdits premiers intervalles temporels et $MH1$ représente le numéro dudit premier intervalle temporel.

$PPCM(x,y)$ est le plus petit commun multiple des deux entiers non nuls $x$ et $y$ et représente le plus petit entier strictement positif qui soit à la fois multiple de $x$ et multiple de $y$.

$y\%x$ représente le reste de la division euclidienne de $x$ par $y$. $PartieEntière(x)$ représente la partie entière de $x$ soit l'entier qui est immédiatement inférieur ou égal à $x$.

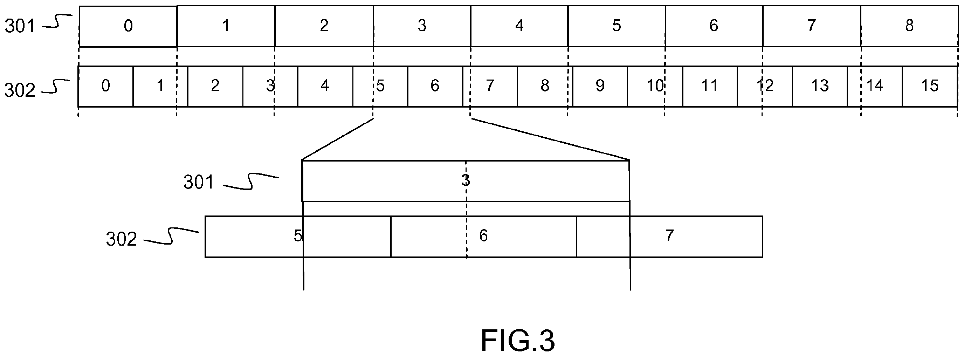

La figure 3 présente un mode de réalisation dans lequel le premier signal est associé à la première suite 302 d'intervalles temporels et le deuxième signal est associé à une deuxième suite 301 d'intervalles temporels. Il est supposé que le mécanisme de détermination de la fréquence de porteuse effectue cette détermination à partir d'intervalles de la première suite. De façon graphique nous voyons que lorsque le deuxième signal est dans l'intervalle temporel numéro 1 de la deuxième suite, cet intervalle temporel à une extrémité tombant dans l'intervalle temporel numéro 1 de la première suite d'intervalles temporels et l'autre extrémité tombant dans l'intervalle temporel numéro 3 de la première suite d'intervalles temporels. Ces deux intervalles temporels de la première suite ne sont pas consécutifs il y a donc lieu de chercher les intervalles temporels intermédiaires. L'homme de l'art peut facilement trouver ce ou ces intervalles temporels intermédiaires, qui est dans notre exemple l'intervalle temporel numéro 2. Lorsque ces intervalles temporels de la première suite ont été trouvés, ils servent à déterminer les fréquences de porteuse que doit utiliser le deuxième signal durant un intervalle temporel de la deuxième suite d'intervalles temporels. Cette détermination des fréquences de porteuse est réalisée par le dispositif 101. Dans ce dispositif le module 201 de génération de nombres pseudo-aléatoire se base sur les intervalles numéro 1, 2 et 3 de la première suite d'intervalles temporels, afin de générer les nombres pseudo-aléatoire correspondant à l'intervalle numéro 1 de la deuxième suite 302. Ensuite l'utilisation de la deuxième table 202 permet la mise en correspondance entre les nombres pseudo-aléatoire et les deuxièmes fréquences de porteuse utilisées par le deuxième signal. Pendant ce laps de temps le premier signal utilise le module 201 de génération de nombres pseudo-aléatoires en se basant sur les mêmes intervalles de la première suite d'intervalles temporels. Donc les nombres pseudo-aléatoires générés pour le premier signal sont identique à ceux générés pour le deuxième signal. Du fait de la construction de la première et de la deuxième table 202 et 203, la première fréquence de porteuse utilisée par le premier signal et la deuxième fréquence de porteuse utilisée par le deuxième signal sont différentes et donc les deux signaux ne peuvent pas s'interférer.

A titre d'exemple non limitatif, l'application numérique des relations permettant la mise en correspondance des intervalles de la première et de la deuxième suite d'intervalles, en utilisant les paramètres de la figure 3 sont les suivantes :

$$M = PPCM(T1,T2)$$
$$a = M / T2$$
$$d = k\%a$$
$$P = PartieEntiere(((d + 1) * T2 - 1) / T1) - PartieEntière(d * T2 / T1)$$
$$MH1 = PartieEntière(k * T2 / T1)$$

dans lesquelles :

- *T*1 est fixée à 144
- *T*2 est fixé à 256

Donne comme résultat :

- *M* est égale à 2304
- *a* est égale 9.

La relation entre un intervalle de la suite 302 et les intervalles correspondants de la suite 301 est alors donné par le tableau ci-dessous :

| Numéro intervalle suite 302 (k) | d=k%a | Nombre d'intervalles suite 301 (P) | Premier intervalle suite 301 (MH1) |
| --- | --- | --- | --- |
| 0 | 0 | 2 | 0 |
| 1 | 1 | 3 | 1 |
| 2 | 2 | 3 | 3 |
| 3 | 3 | 3 | 5 |
| 4 | 4 | 2 | 7 |
| 5 | 5 | 3 | 8 |
| 6 | 6 | 3 | 10 |
| 7 | 7 | 3 | 12 |
| 8 | 8 | 2 | 14 |

## Revendications

**1.** Système de modification de la fréquence de porteuse d'un premier signal associée à une première suite d'intervalles temporels consécutifs de durée T1 et d'un deuxième signal associée à une deuxième suite d'intervalles temporels consécutifs de durée T2, comprenant :

- des premiers moyens de détermination (101) de deux fréquences de porteuse respectivement associé à chacun des deux signaux à partir d'un intervalle temporel ou d'au moins deux intervalles temporels consécutifs et continus, ledit ou lesdits intervalles temporels appartenant à une suite d'intervalles temporels consécutifs de durée connue, lesdits premiers moyens de détermination (101) étant adaptés pour déterminer lesdites fréquences de porteuse de manière synchronisée pour lesdits premier et deuxième signaux et à partir d'un intervalle temporel ou d'au moins deux intervalles temporels consécutifs, ledit ou lesdits intervalles temporels appartenant à ladite première suite;
- des deuxièmes moyens de détermination (102) d'un premier intervalle temporel ou d'au moins deux premiers intervalles temporels consécutifs appartenant à la première suite, à partir d'un deuxième intervalle temporel appartenant à la deuxième suite, par mise en correspondance temporelle de chaque extrémité dudit intervalle temporel de ladite deuxième suite avec un intervalle de ladite première suite comprenant cette extrémité

ledit système étant **caractérisé en ce que**:

- ladite durée T1 desdits intervalles temporels de ladite première suite d'intervalles temporels est différente de ladite durée T2 desdits intervalles temporels de ladite deuxième suite d'intervalles temporels.

**2.** Système suivant la revendication 1 dans lequel les deuxièmes moyens de détermination (102) comprennent :

- des moyens de calcul adaptés pour calculer ledit ou lesdits intervalles temporels déterminés par les relations suivantes

$$M = PPCM\,(T1,T2)$$
$$a = M\,/\,T2$$
$$d = k\%a$$
$$P = PartieEntiere(((d+1)*T2-1)/T1) - PartieEntière(d*T2/T1)$$
$$MH1 = PartieEntière(k*T2/T1)$$

dans lesquelles $T1$ représente la durée de chacun des premiers intervalles de la première suite, $T2$ représente la durée de chacun des premiers intervalles de la deuxième suite, $k$ représente le numéro dudit deuxième intervalle temporel, $P$ représente le nombre desdits premiers intervalles temporels et $MH1$ représente le numéro dudit premier intervalle temporel, $PPCM(x,y)$ est le plus petit commun multiple des deux entiers non nuls $x$ et $y$ et représente le plus petit entier strictement positif qui soit à la fois multiple de $x$ et multiple de $y$, $y\%x$ représente le reste de la division euclidienne de $x$ par $y$ et $PartieEntière(x)$ représente la partie entière de $x$ soit l'entier qui est immédiatement inférieur ou égal à $x$.

3. Procédé de modification de la fréquence de porteuse d'un premier signal associée à une première suite d'intervalles temporels consécutifs de durée T1 et d'un deuxième signal associée à une deuxième suite d'intervalles temporels consécutifs de durée T2 comportant les étapes suivantes

- une étape de détermination d'un premier intervalle temporel ou d'au moins deux premiers intervalles temporels consécutifs et appartenant à la première suite, à partir d'un deuxième intervalle temporel appartenant à la deuxième suite, par mise en correspondance temporelle de chaque extrémité dudit intervalle temporel de ladite deuxième suite avec un intervalle de ladite première suite comprenant cette extrémité
- une étape de détermination de deux fréquences de porteuse de manière synchronisée pour lesdits premier et deuxième signaux et respectivement associé à chacun des deux signaux à partir d'un intervalle temporel ou d'au moins deux intervalles temporels consécutifs, ledit ou lesdits intervalles temporels appartenant à ladite première suite.

ledit procédé étant **caractérisé en ce que**:

- ladite durée T1 desdits intervalles temporels de ladite première suite d'intervalles temporels est différente de ladite durée T2 desdits intervalles temporels de ladite deuxième suite d'intervalles temporels.

## Patentansprüche

1. System zur Modifizierung der Trägerwellenfrequenz eines ersten Signals, verbunden mit einer ersten Folge von aufeinander folgenden Zeitintervallen der Dauer T1, und eines zweiten Signals, verbunden mit einer zweiten Folge von aufeinander folgenden Zeitintervallen der Dauer T2, Folgendes beinhaltend:

- erste Bestimmungsmittel (101) zweier Trägerwellenfrequenzen, welche jeweils mit einem jeden der beiden Signale anhand eines Zeitintervalls oder anhand von mindestens zwei zeitlich aufeinander folgenden und kontinuierlichen Zeitintervallen verbunden sind,

wobei das oder die Zeitintervalle zu einer Folge von aufeinander folgenden Zeitintervallen bekannter Dauer gehört/gehören, wobei die ersten Bestimmungsmittel (101) geeignet sind, die Trägerwellenfrequenzen synchronisiert für das erste und das zweite Signal und anhand eines Zeitintervalls oder anhand von mindestens zwei zeitlich aufeinander folgenden Zeitintervallen zu bestimmen,
wobei das oder die Zeitintervalle zur ersten Folge gehört/gehören;

- zweite Bestimmungsmittel (102) eines ersten Zeitintervalls oder von mindestens zwei ersten, zeitlich aufeinander folgenden Zeitintervallen, welche(s) zur ersten Folge gehört/gehören, anhand eines zweiten Zeitintervalls, welches zur zweiten Folge gehört, durch zeitliche Entsprechung eines jeden Endes des Zeitintervalls der zweiten Folge mit einem Zeitintervall der ersten Folge, welche dieses Ende beinhaltet wobei das System **dadurch**

**gekennzeichnet ist, dass**:

- die Dauer T1 der Zeitintervalle der ersten Folge von Zeitintervallen sich von der Dauer T2 der Zeitintervalle der zweiten Folge von Zeitintervallen unterscheidet.

2. System nach Anspruch 1, bei welchem die zweiten Bestimmungsmittel (102) Folgendes beinhalten:

- Berechnungsmittel, welche geeignet sind, das oder die Zeitintervall(e) zu berechnen, das/die durch folgende Beziehungen bestimmt wird/werden:

$$M = PPCM\,(T1,T2)$$
$$a = M \,/\, T2$$
$$d = k\%a$$
$$P = GanzzahligerTeil(((d+1)*T2-1)\,1\,T1) - GanzzahligerTeil(d*T2\,/\,T1)$$
$$MH1 = GanzzahligerTeil(k*T2\,/\,T1)$$

wobei $T1$ die Dauer eines jeden der ersten Intervalle der ersten Folge darstellt, $T2$ die Dauer eines jeden der ersten Intervalle der zweiten Folge darstellt, $k$ die Nummer des zweiten Zeitintervalls darstellt, $P$ die Anzahl der ersten Zeitintervalle darstellt und $MH1$ die Nummer des ersten Zeitintervalls darstellt, wobei $PPCM(x,y)$ das kleinste gemeinsame Vielfache der beiden Ganzzahlen ungleich null x und y ist und die kleinste strikt positive Ganzzahl darstellt, die gleichzeitig ein Vielfaches von $x$ und ein Vielfaches von $y$ ist, wobei $y\%x$ den Rest der euklidischen Teilung von $x$ durch $y$ ist und wobei $GanzzahligerTeil(x)$ den ganzzahligen Teil von x darstellt, das heißt, diejenige Ganzzahl, die direkt kleiner oder gleich $x$ ist.

3. Verfahren zur Modifizierung der Trägerwellenfrequenz eines ersten Signals, verbunden mit einer ersten Folge von aufeinander folgenden Zeitintervallen der Dauer T1, und eines zweiten Signals, verbunden mit einer zweiten Folge von aufeinander folgenden Zeitintervallen der Dauer T2, folgende Schritte beinhaltend:

- einen Schritt des Bestimmens eines ersten Zeitintervalls oder von mindestens zwei ersten, zeitlich aufeinander folgenden Zeitintervallen, welche(s) zur ersten Folge gehört/gehören, anhand eines zweiten Zeitintervalls, welches zur zweiten Folge gehört, durch zeitliche Entsprechung eines jeden Endes des Zeitintervalls der zweiten Folge mit einem Intervall der ersten Folge, welche dieses Ende beinhaltet
- einen Schritt des Bestimmens zweier Trägerwellenfrequenzen, synchronisiert für das erste und das zweite Signal, welche jeweils mit einem jeden der beiden Signale anhand eines Zeitintervalls oder anhand von mindestens zwei zeitlich aufeinander folgenden Zeitintervallen verbunden sind, wobei das oder die Zeitintervalle zur ersten Folge gehört/gehören,

wobei das Verfahren **dadurch gekennzeichnet ist, dass**:

- die Dauer T1 der Zeitintervalle der ersten Folge von Zeitintervallen sich von der Dauer T2 der Zeitintervalle der zweiten Folge von Zeitintervallen unterscheidet.

## Claims

1. System for modifying the carrier frequency of a first signal associated with a first sequence of consecutive time intervals of duration T1 and of a second signal associated with a second sequence of consecutive time intervals of duration T2 comprising:

- first means for determining (101) two carrier frequencies respectively associated with each of the two signals on the basis of one time interval or at least two consecutive and continuous time intervals, said time interval(s) belonging to a sequence of consecutive time intervals of known duration, said first means for determining (101) being adapted to determine said carrier frequencies in a synchronised manner for said first and second signals and on the basis of a time interval or at least two consecutive time intervals, said time interval(s) belonging to the first sequence;

- second means for determining (102) a first time interval or at least two first consecutive time intervals belonging to the first sequence, on the basis of a second time interval belonging to the second sequence, by establishing a temporal correspondence between each end of said time interval of said second sequence and an interval of said first sequence including this end,

said system being **characterised in that**:

- said duration T1 of said time intervals of said first sequence of time intervals is different from said duration T2 of said time intervals of said second sequence of time intervals.

2. System according to Claim 1, in which the second determination means (102) comprise:

- calculation means suitable for calculating said time interval(s) determined by the following relations:

$$
\begin{cases}
M = PPCM(T1, T2) \\
a = M / T2 \\
d = k \% a \\
P = EntirePart(((d+1)*T2-1)/T1) - EntirePart(d*T2/T1) \\
MH1 = EntirePart(k*T2/T1)
\end{cases}
$$

in which $T1$ represents the duration of each of the first intervals of the first sequence, $T2$ represents the duration of each of the first intervals of the second sequence, $k$ represents the number of said second time interval, $P$ represents the number of said first time intervals, and $MH1$ represents the number of said first time interval, $PPCM(x,y)$ is the least common multiple of two non-zero integers $x$ and $y$ and represents the smallest strictly positive integer which is both a multiple of $x$ and a multiple of $y$, $y\%x$ represents the remainder of the Euclidean division of $x$ by $y$ and $EntirePart(x)$ represents the entire part of $x$, i.e. the integer which is immediately less than or equal to $x$.

3. Method for modifying the carrier frequency of a first signal associated with a first sequence of consecutive time intervals of duration T1 and of a second signal associated with a second sequence of consecutive time intervals of duration T2 comprising the following steps:

- a step of determining a first time interval or at least two first consecutive time intervals belonging to the first sequence, on the basis of a second time interval belonging to the second sequence, by establishing a temporal correspondence between each end of said time interval of said second sequence and an interval of said first sequence including this end,
- a step of determining two carrier frequencies in a synchronized manner for said first and second signals and respectively associated with each of the two signals on the basis of one time interval or at least two consecutive time intervals, said time interval(s) belonging to said first sequence.

said method being **characterised in that**:
said duration T1 of said time intervals of said first sequence of time intervals being different from said duration T2 of said time intervals of said second sequence of time intervals.

FIG.1

FIG.2

| 301 | 0 | 1 | 2 | 3 | 4 | 5 | 6 | 7 | 8 |

| 302 | 0 | 1 | 2 | 3 | 4 | 5 | 6 | 7 | 8 | 9 | 10 | 11 | 12 | 13 | 14 | 15 |

301

| | 3 | |

302

| 5 | 6 | 7 |

FIG.3

EP 2 608 416 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6278723 B